# EUROPÄISCHE PATENTANMELDUNG

(11) **EP 2 196 496 A2**
(43) Veröffentlichungstag der Anmeldung: **16.06.2010**
(21) Anmeldenummer: 09177832.4
(22) Anmeldetag: 03.12.2009
(51) Int. Cl.: C08K 5/00

(54) **Additivzusammensetzung**

(30) Priorität: 11.12.2008 DE 102008054530
(71) Anmelder: Rhein Chemie Rheinau GmbH, 68219 Mannheim (DE)
(72) Erfinder: Bergmann, Christina, 22523 Hamburg (DE); Früh, Thomas, 67112 Mutterstadt (DE)
(74) Vertreter: Siegers, Britta

(57) **Zusammenfassung**

Beschrieben wird die Verwendung von speziellen Dispergiermitteln für ein Vulkanisationsadditiv sowie eine entsprechende Additivzusammensetzung.

## Beschreibung

Die vorliegende Erfindung betrifft Zusammensetzungen, enthaltend mindestens ein Vulkanisationsadditiv und mindestens ein Dispergiermittel, sowie die Verwendung dieser Zusammensetzung bei der Herstellung von Vulkanisaten. Weiterer Gegenstand der vorliegenden Erfindung ist ein Verfahren zur Herstellung entsprechender Zusammensetzungen. Ferner betrifft die vorliegende Erfindung die Verwendung von speziellen Verbindungen als Dispergiermittel für Vulkanisationsadditive.

In der Kautschukindustrie werden Schwefel und organische Beschleuniger zum Härten von Kautschuken, wie beispielsweise Naturkautschuk (NR), Acrylnitril-Butadien-Kautschuke (NBR) oder Ethylen-Propylen-Dien-Kautschuke (EPDM), verwendet. Bei der Herstellung von Epichlorhydrin-Kautschuken werden darüber hinaus Triazinsysteme zum Härten der zu vulkanisierenden Kautschuke verwendet.

Um die Eigenschaften der durch die Vulkanisation gebildeten Elastomere zu steuern bzw. um den Vulkanisationsprozess für diese Vulkanisate positiv zu beeinflussen, werden bei dem Härten der Kautschuke häufig unterschiedliche Vulkanisationsadditive verwendet.

Additive, welche während der Vulkanisation von Kautschuken verwendet werden, können beispielsweise ausgewählt werden aus der Gruppe der Vulkanisationsbeschleuniger, wie Mercaptoverbindungen, Sulfenamide, Thiuram, Guanidin, Dithiocarbamate und Amine; Vulkanisationsverzögerer, wie Phthalsäureanhydrid und N-Cyclohexylthiophthalimid; Alterungsschutzmittel, wie 2-Mercaptobenzimidazol; Mastifiziermittel, wie 2,2'-Dibenzamidodiphenydisulfid; Weichmacher oder Prozessöle; verstärkenden Harze, wie Phenol-Formaldehydharz; und Vulkanisationsaktivatoren, wie Zinkoxid. Diese Vulkanisationsadditive werden im Allgemeinen der zur Vulkanisation vorgesehenen Kautschukmischung vor dem eigentlichen Vulkanisierungsprozess zugegeben.
Ein Problem, welches sich häufig im Zusammenhang mit der Verwendung dieser Vulkanisationsadditive ergibt, ist deren schlechte Dispergierbarkeit in den entsprechenden Kautschukausgangsmischungen.

Um die Dispersion entsprechender Additive in zu vulkanisierenden Kautschukmischungen zu verbessern, werden in der DE 197 27 848 A unterschiedliche Zusammensetzungen für Kautschuk und Kautschukmischungen beschrieben, die mindestens eine feste, pulvrige Additivsubstanz und mindestens ein Dispergiermittel enthalten. In diesen Zusammensetzungen ist die mindestens eine Additivsubstanz mit dem mindestens einen Dispergiermittel beschichtet. Die resultierende Zusammensetzung liegt als Granulat oder Mikrogranulat vor. Zur Beschichtung der Additivsubstanzen eignen sich Fettsäuren der Kettenlängen C₁₂-C₃₀; Fettalkohole der Kettenlängen C₁₂-C₃₀ und durch Veresterung der vorgenannten Säuren und Alkohole hergestellte Esterwachse; Ester von Fettsäuren der Kettenlängen C₁₂-C₃₀ mit Diolen und/oder Polyolen, wie beispielsweise Ethylenglykol, Polyethylenglykol, Glycerin, Trimethylolpropan, Pentaerythrit, Dipentaerythrit und dergleichen; ferner Esterwachse natürlichen Ursprungs, wie beispielsweise Carnaubawachs, Bienenwachs und Montanwachs. Nachteilig an diesen Zusammensetzungen ist jedoch, dass vor deren Verwendung erst ein beschichtetes Additiv, beispielsweise in einem Wirbelschichtreaktor, hergestellt werden muss. Darüber hinaus ist in der DE 197 27 848 A1 die Herstellung von einer entsprechenden Zusammensetzung nur für das Vulkanisationsadditiv Zinkoxid gezeigt. Ob sich auch andere Vulkanisationsadditive entsprechend der Verfahrensweise der DE 197 27 848 A1 beschichten lassen, ist nicht belegt. Darüber hinaus ist die in der DE 197 27 848 A1 beschriebene Verfahrensweise nicht universell einsetzbar, da nicht jedes mögliche Dispergiermittel als Beschichtungsmittel für ein Additiv geeignet ist und auch die Herstellungsart der Beschichtung auf die verwendeten Chemikalien, d.h. das Additiv und das Dispergiermittel, abgestimmt werden muss. Auch der Einfluss der Dispergierbeschichtung auf die Additivwirkung ist nicht bekannt.

Das Problem einer schlechten Dispergierbarkeit tritt insbesondere bei der Einarbeitung von Vulkanisationsverzögerern in die zu vulkanisierende Kautschukmischung auf.

Ein bekannter Vulkanisationsverzögerer ist beispielsweise das unter dem Namen Vulkalent^{®} E kommerziell von der Rhein Chemie Rheinau GmbH erhältliche N-Phenyl-N-trichlormethylsulfinylbenzolsulfonamid. Dieser Vulkanisationsverzögerer wird unter anderem auch in einem Verfahren zur Verringerung der Formverschmutzung in Spritzgussverfahren von Nitrilkautschuk gemäß EP 1 331 074 A1 verwendet.

Ein weiteres Anwendungsgebiet für Vulkalent^{®} E ist darüber hinaus auch die Verminderung des Nitrosamingehalts durch Schwefelvulkanisation hergestellter Kautschukvulkanisate, wie es in der DE 40 33 902 A beschrieben ist.

Zusammenfassend ist festzuhalten, dass bei einer Vielzahl an Vulkanisationsadditiven, wie beispielsweise bei Vulkalent^{®} E, das Problem besteht, dass sie verhältnismäßig schlecht in die zu vulkanisierenden Kautschukmischungen dispergiert werden können. Demgemäss besteht ein Bedarf nach einer Verfahrensweise, mit welcher eine einfache Dispergierung von Vulkanisationsadditiven in Kautschuken möglich ist. Unter einer einfachen Dispergierung von Vulkanisationadditiven wird im Rahmen der vorliegenden Erfindung insbesondere eine homogene Verteilung der Vulkanisationsadditive in der zu vulkanisierenden Ausgangsmischung verstanden. Bei einer homogenen Mischung sind die Bestandteile auf molekularer Ebene vollkommen durchmischt, so dass sie sich nicht mehr z.B. durch bloße Filtration voneinander trennen lassen. Die physikalischen Eigenschaften der homogenen Mischung sind an jedem Ort der Mischung im Wesentlichen identisch. Bei der praktischen Anwendung der Vulkanisate äußert sich die Inhomogenität vorrangig durch das Auftreten von Stippen (Akkumulate), welche auf nicht aufgeschlossenen bzw. eingearbeiteten Kautschuk, welcher sich als fester Partikel bemerkbar macht, zurückgehen.

Die Aufgabe der vorliegenden Erfindung ist demgemäss zunächst, eine Verfahrensweise zur Vulkanisation von Kautschuken bereitzustellen, mit welcher Vukanisationsadditive in zu vulkanisierenden Ausgangsmischungen leichter dispergiert werden können. Die erfindungemäße Vorgehensweise soll sich dabei insbesondere für den Vulkanisationsverzögerer N-Phenyl-N-trichlormethylsulfinylbenzolsulfonamid (Vulkalent^{®} E) eignen, ist jedoch nicht auf dieses Vulkanisationsadditiv beschränkt.

Erfindungsgemäß wurde nun herausgefunden, dass spezielle Dispergiermittel die Einarbeitung von Vulkanisationsadditiven in zu vulkanisierende Kautschukmischungen erleichtern.

Bei diesen Dispergiermitteln handelt es sich vorzugsweise um ölartige Verbindungen, welche insbesondere einen die Polarität definierenden 8-Parameter von mindestens 12 J/cm³, vorzugsweise mindestens 14 J/cm³, besonders bevorzugt mindestens 16 J/cm³, noch weiter bevorzugt mindestens 17 J /cm³, aufweisen.

Der die Polarität definierende 8-Parameter kann beispielsweise mittels der inversen Gaschromatographie erfolgen. Entsprechende Verfahren sind umfangreich in den Publikationen (1) "Verträglichkeit von Kautschuken in Verschnitten", Teil 1, Theorie und Methoden, R.H. Schuster, April 1992, Seiten 271 bis 278, sowie (2) "Verträglichkeit von Kautschuken in Verschnitten", Teil 2, Mischen, Voraussage und Entwicklung der Phasenmorphologie, Verteilung von Ruß und Vernetzungschemikalien, R.H. Schuster, Februar 1996, Seiten 71 bis 76, sowie in der darin zitierten Literatur beschrieben. Darüber hinaus kann für einzelne Verbindungen der 8-Parameter auch über eine Inkrementrechnung bestimmt werden, welche in P.A. Small, J. Appl. Chem., 3, Seiten 71ff., 1953 beschrieben ist.

Besonders bevorzugt werden diese ölartigen Dispergiermittel, ausgewählt werden aus der Gruppe, bestehend aus Dialkylpolysulfiden, Polyethern, Esterölen und Ölen auf Basis nachwachsender Rohstoffe.

Die vorliegende Erfindung betrifft demnach in einem ersten Aspekt eine Zusammensetzung, enthaltend mindestens ein Vulkanisationsadditiv und mindestens ein wie vorstehend definiertes Dispergiermittel für das Vulkanisationsadditiv.

Die erfindungsgemäße Zusammensetzung ist ferner vorzugsweise dadurch gekennzeichnet, dass sie, bezogen auf ihre Gesamtmenge, 90 bis 20 Gew.-% Additivsubstanz(en) und 10 bis 80 Gew.-% Dispergiermittel, besonders bevorzugt 90 bis 40 Gew.-% Additivsubstanz(en) und 10 bis 60 Gew.-% Dispergiermittel, insbesondere 85 bis 65 Gew.-% Additivsubstanz(en) und 15 bis 35 Gew.-% Dispergiermittel, umfasst. Im Rahmen der vorliegenden Erfindung ist es möglich, dass die erfindungsgemäße Zusammensetzung auch mehrere Vulkanisationsadditive und/oder mehrere erfindungsgemäße Dispergiermittel gleichzeitig umfasst.

Erfindungsgemäß ist somit eine Zusammensetzung, bestehend aus mindestens einem speziellen Dispergiermittel und mindestens einem speziellen Vulkanisationsadditiv vorgesehen. Diese Zusammensetzung kann bei der Vulkanisation von Kautschuken beispielsweise als Additivpaket verwendet werden. Dabei ist es insbesondere nicht erforderlich, dass das in diesem Additivpaket verwendete Vulkanisationsadditiv mit dem Dispergiermittel beschichtet wird, wie es in der DE 197 27 848 A1 vorgesehen ist. Erfindungsgemäß ausreichend ist die Gegenwart des mindestens einen Dispergiermittels und des mindestens einen Vulkanisationsadditivs in einer Mischung. Im Rahmen der vorliegenden Erfindung ist ferner vorzugsweise nicht vorgesehen, dass das Dispergiermittel eine chemische Reaktion mit dem zu dispergierenden Vulkanisationsadditiv eingeht.

Die erfindungsgemäße Zusammensetzung unterscheidet sich als Additivpaket von einer zu vulkanisierenden Kautschukzusammensetzung, in welcher die entsprechenden Bestandteile der erfindungsgemäßen Zusammensetzung ebenfalls vorkommen können, dadurch, dass, bezogen auf die Gesamtzusammensetzung, deutlich höhere Gehalte an Vulkanisationsadditiv und Dispergiermittel realisiert werden.

Die erfindungsgemäße Zusammensetzung liegt vorzugsweise als Granulat oder Mikrogranulat vor, wobei die Granulatpartikel bzw. Mikrogranulatpartikel vorzugsweise eine Größe von 0,01 bis 10 mm, bevorzugt von 0,02 bis 5 mm, aufweisen.

In einer weiteren Ausführungsform der vorliegenden Erfindung ist das verwendete Vulkanisationsadditiv polymergebunden. Zum Binden entsprechender Additive können beliebige höher- oder niedermolekulare Polymere verwendet werden. Wenn die Vulkanisationsadditive polymergebunden verwendet werden, so bestehen die polymergebundenen Additive im Allgemeinen aus 70 bis 80 Gew.-% Additiv und 20 bis 30 Gew.-% Polymerbindemittel.

In einer Ausführungsform der vorliegenden Erfindung kann das Dispergiermittel auch in einer auf einem Träger aufgebrachten Form verwendet werden. Als Träger eignen sich zu diesem Zweck beispielsweise Mikrogele, Ruß, vorzugsweise hochdisperse Kieselsäuren, synthetische Silikate, natürliche Silikate, Metalloxide, Metallcarbonate, Metallsulfate, Metallhydroxide und andere organische Trägermaterialien.

In einer weiteren Ausführungsform der vorliegenden Erfindung kann das Vulkanisationsadditiv in einer auf einem Träger aufgebrachten Form verwendet werden. Als Träger eignen sich zu diesem Zweck die zuvor für das Dispergiermittel genannten Träger.

In einer noch weiteren Ausführungsform der vorliegenden Erfindung können sowohl das Dispergiermittel als auch das Vulkanisationsadditiv in einer auf einem Träger aufgebrachten Form verwendet werden. Als Träger eignen sich zu diesem Zweck die zuvor für das Dispergiermittel genannten Träger.

Die Dispergierung der Vulkanisationsadditive unter Verwendung des erfindungsgemäß vorgesehenen Dispergiermittels erfolgt vorzugsweise in einer noch zu vulkanisierenden Kautschukausgangsmischung.

Unter Vulkanisationsadditive werden im Rahmen der vorliegenden Erfindung alle Additive einschließlich von Vulkanisationskatalysatoren verstanden, welche vor oder während der Vulkanisation einer zu vulkanisierenden Polymermischung zugegeben werden, um den Vulkanisationsprozess oder die Eigenschaft des resultierenden Elastomers zu beeinflussen. Die Additivsubstanzen sind dabei aus allgemein bekannten Kautschukchemikalien und -zuschlagstoffen ausgewählt. Dabei sind Mastikationschemikalien; Vulkanisationschemikalien; Alterungs- und Ermüdungsschutzchemikalien; Füllstoffe; Pigmente; Weichmacher; Faktisse; Treibmittel; Haftmittel und sonstige Hilfsmittel als Bestandteil des Vulkanisationsadditivs der erfindungsgemäßen Zusammensetzungen von Interesse.

Insbesondere werden die Vulkanisationschemikalien ausgewählt aus der Gruppe, bestehend aus Vulkanisationsbeschleunigern, Vulkanisationsvernetzern, Vulkanisationsverzögerern, Antioxidationsmaterialien und Beschleunigeraktivatoren.

Strukturell gesehen können sich die Vulkanisationsadditive erheblich unterscheiden und beispielsweise ausgewählt werden aus der Gruppe, bestehend aus Carbamaten, Xanthogenaten, Thiuramen, Thiadiazolen Guanidinderivaten, Sulfaniliden, Phthalsäureamide und Phthalimiden.

Wie bereits erwähnt, eignen sich die erfindungsgemäß verwendeten Dispergiergiermittel für beliebige Vulkanisationsadditive, wobei es sich bei den Vulkanisationsadditiven beispielsweise um einen Vulkanisationsbeschleuniger handeln kann. Entsprechende Vulkanisationsbeschleuniger sind in J. Schnetger "Lexikon der Kautschuktechnik" 3. Auflage, Hüthig Verlag Heidelberg, 2004 erwähnt, dessen gesamte diesbezügliche Offenbarung durch Bezugnahme in die vorliegende Erfindung eingeschlossen wird.

Im Rahmen der vorliegenden Erfindung können die Vulkanisationsbeschleuniger beispielsweise ausgewählt werden aus der Gruppe der Xanthogenate; Dithiocarbamate; Tetramethylthiuramdisulfide; Thiurame; Thiazole; Guanidine; Thioharnstoff-Derivate; Amin-Derivate, wie Tetramine; Sulfenimide; Piperazine; Amincarbamate, Sulfenamide; Dithiophosphorsäure-Derivate und Triazin-Derivate.

Beispielhafte Vertreter für Vulkanisationsbeschleuniger, welche mit Hilfe der erfindungsgemäß vorgesehenen Dispergiermittel dispergiert werden können, sind Benzothiazyl-2-cyclohexyl-sulfenamid (CBS), Benzothiazyl-2-tert.-butylsulfenamid (TBBS), Benzothiazyl-2-dicyclohexylsulfenamid (DCBS), 1,3-Diethylthioharnstoff (DETU), 2-Mercaptobenzothiazol (MBT) und dessen Zinksalze (ZMBT), Kupferdimethyldithiocarbamat (CDMC), Benzothiazyl-2-sulfenmorpholid (MBS), Benzothiazyldicyclohexylsulfenamid (DCBS), 2-Mercaptobenzothiazoldisulfid (MBTS), Dimethyldiphenylthiuramdisulfid (MPTD), Tetrabenzylthiuramdisulfid (TBZTD), Diphenylguanidin (DPG), Di-ortho-tolylguanidin (DOTG), o-Tolylbiguanid (OTBG), Tetramethylthiorammonosulfid (TMTM), Dipentamethylenthiuramtetrasulfid (DPTT), Tetra-iso-butylthiuramdisulfid (IBTD), Tetraethylthiuramdisulfid (TETD), Tetramethylthiuramdisulfid (TMTD), Zink-N-dimethyldithiocarbamat (ZDMC), Zink-N-diethyldithiocarbamat (ZDEC), Zink-N-dibutyl-dithiocarbamat (ZDBC), Zink-N-ethylphenyl-dithiocarbamat (ZEBC), Zinkdibenzyldithiocarbamat (ZBEC), Zinkdiisobutyldithiocarbamat (ZDiBC), Zink-N-pentamethylendithiocarbamat (ZPMC), Zink-N-ethylphenyldithiocarbamat (ZEPC), Zink-2-Mercaptobenzothiazol (ZMBT), Ethylenthioharnstoff (ETU), Tellurdiethyldithiocarbamat (TDEC), Diethylthioharnstoff (DETU), N,N-Ethylenthioharnstoff (ETU), Hexamethylentetramin (HMT), Diphenylthioharnstoff (DPTU), Triethylentetramin (TETA), Triethyltrimethyltriamin (TTT); N-t-Butyl-2-benzothiazol-sulfenimid (TBSI); 1,1'-Dithiobis(4-methylpiperazin); Hexamethylendiamincarbamat (HMDAC); Benzothiazyl-2tert.-butylsulfenamid (TOBS), N,N'-Diethylthiocarbamyl-N'-cyclohexylsulfenamid (DETCS), N-Oxidiehtylendithiocarbamyl-N'-oxydiethylensulfenamid (OTOS), Zn-isopropylxanthogenat (ZIX), Selen-, Tellur-, Blei-, Kupfer- und Erdalkalisalze von Dithiocarbaminsäuren; Pentamethylenammonium-N-pentamethylendithiocarbamat; Cyclohexylethylamin; Dibutylamin; Polyethylenpolymine handeln.

Erfindungsgemäß können die Dispergiermittel auch zum Dispergieren von Vulkanisationsvernetzern verwendet werden. Vulkanisationsvernetzer, welche mittels den erfindungsgemäßen Dispergiermitteln dispergiert werden können, sind ebenfalls in J. Schnetger "Lexikon der Kautschuktechnik", 3. Auflage, Hüthig Verlag Heidelberg, 2004 erwähnt, dessen gesamte Offenbarung unter Bezugnahme in die vorliegende Erfindung eingeschlossen wird.

Die Vulkanisationsvernetzer können im Rahmen der vorliegenden Erfindung beispielsweise ausgewählt werden aus der Gruppe, bestehend aus Schwefel, Schwefelspendern, Sulfiden, Bleioxid, Zinkoxid, Harzen (z.B. Alkylphenoldisulfid), Aminen, Isocyanaten, Carbamaten und Peroxiden. Beispielhafte Vertreter der Vulkanisationsvernetzer sind Schwefel in seinen verschiedenen allotropen Formen, Dimorpholyldisulfid (DTDM), 2-Morpholinodithiobenzothiazol (MBSS), Tetramethylthiuramdisulfid (TMTD), Caprolactamdisulfid, Dipentamethylenthiuramdisulfid, Benzoyl-p-Chinondioxim (DPQD), Dithiodimorpholin (DTDM), Dipentamethylenthiuramtetrasulfid (DPTT) und Peroxide.

Die zu dispergierenden Vulkanisationsadditive können im Rahmen der vorliegenden Erfindung ferner ausgewählt werden aus den Vulkanisationsverzögerern. Entsprechende Vulkanisationsverzögerer sind zum Beispiel Sulfonamide, Sulfanilide oder Phthalimide. Spezifische Beispiele entsprechender Vulkanisationsverzögerer können ausgewählt werden aus der Gruppe, bestehend aus N-Trichlormethylsulfenylbenzolsulfanilid, N-(Cyclohexylthio)phthalimid, Phtalsäureanhydrid (PTA), Salicylsäure (SAL), N-Nitrosodiphenylamin (NDPA), Trichlormelamin (TCM) und Maleinsäureanhydrid (MSA). Entsprechende Vulkanisationsverzögerer sind ebenfalls in J. Schnetger, "Lexikon der Kautschuktechnik", 3. Auflage, Hüthig Verlag, Heidelberg, 2004, erwähnt.

Ein in dieser Hinsicht insbesondere bevorzugtes Vulkanisationsadditiv ist das N-Trichlormethylsulfenylbenzolsulfanilid, welches kommerziell unter der Bezeichnung Vulkalent^{®} E vertrieben wird.

Die zu dispergierenden Vulkanisationsadditive können im Rahmen der vorliegenden Erfindung ferner ausgewählt werden aus Antioxidatien. Entsprechende Antioxidantien sind beispielsweise Zink-methyl-2-mercaptobenzimidazol (ZMMBI), Mercaptobenzimidazol (MBI), 2-Mercaptomethylbenzimidazol (2-MMBI), 3-Mercaptomethylbenzimidazol (3-MMBI), 4-Mercaptomethylbenzimidazol (4-MMBI), Microgranulat (MG), Microgranulat coated (MGC); 2,2,4-Trimethyl-1,2-dihydrochinlin (TMQ), Nickel-dibutyldithiocarbamat(NDBC), 2,6-Di-tert.-butyl-p-kresol (BHT) und 2,2'-Methylen-bis(4-methyl-btert.butylphenol) (BKF).

Die zu dispergierenden Vulkanisationsadditive können im Rahmen der vorliegenden Erfindung ferner ausgewählt werden aus Beschleunigeraktivatoren, wie Triallylcyanurat (TAC) und N,N'Phenylendimaleimid (HVA-2).

Die zu dispergierenden Vulkanisationsadditive können ferner ausgewählt werden aus Alterungsschutzmitteln, wie verfärbende Alterungsschutzmittel mit Ermüdungs- und Ozonschutzwirkung, z.B. N-Isopropyl-N'-phenyl-p-phenylen-diamin (IPPD); verfärbende Alterungsschutzmittel mit Ermüdungsschutz, aber ohne Ozonschutzwirkung, z.B. Phenyl-a-naphthylamin (PAN); verfärbende Alterungsschutzmittel mit geringer Ermüdungs- und ohne Ozonschutzwirkung, z.B. octyliertes Diphenylamin (ODPA); nicht verfärbende Alterungsschutzmittel mit Ermüdungsschutz und gutem Hitzeschutz, z.B. styrolisierte Phenole (SPH); nicht verfärbende Alterungsschutzmittel ohne Ermüdungs- oder Ozonschutzwirkung, z.B. 2,6-Di-tert.-butyl-p-kresol (BHT); nicht verfärbende Ozonschutzmittel ohne Alterungsschutzwirkung, z.B. Wachse (Gemische aus speziellen Kohlenwasserstoffen), cyclische Acetale und Enolether; und Hydrolyseschutzmitteln, z.B. Polycarbodiimide.

Die zu dispergierenden Vulkanisationsadditive können auch Mastikationschemikalien sein, welche vorzugsweise ausgewählt werden aus der Gruppe, bestehend aus Thiphenolen, Thiophenolzinksalzen, substituierten aromatischen Disulfiden, Peroxiden, Derivaten von Thiocarbonsäuren, Hydrazinderivaten, Nitrosoverbindungen und Metallkomplexen, z.B. Eisenhemiporphyrazin, Eisenphthalocyanin, Eisenacetonylacetat und dessen Zn-Salz.

Wie bereits beschrieben, ist die erfindungsgemäße Wirkung der Dispergiermittel nicht auf die zuvor genannten Vulkanisationsadditive beschränkt und es können im Rahmen der erfindungsgemäßen Kombination mit den Dispergiermitteln weitere, vorstehend nicht genannte Vulkanisationsadditive dispergiert werden.

Das Dispergiermittel wird im Rahmen der vorliegenden Erfindung ausgewählt aus der Gruppe, bestehend aus Dialkylpolysulfiden, Polyethern, Esterölen und Ölen auf Basis von nachwachsenden Rohstoffen.

Wenn ein Dialkylpolysulfid verwendet wird, so kann es sich um ein Polysulfid der allgemeinen Formel (I) handeln 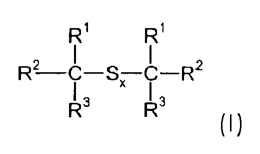 worin
- R¹ bis R³,: jeweils unabhängig voneinander, gleich oder verschieden sind und für einen linearen oder verzweigten C₁- bis C₁₈-Alkylrest oder für Wasserstoff stehen und
- x: für die Zahlen 2 bis 5, vorzugsweise 3 bis 5, steht.

Im Rahmen der vorliegenden Erfindung ist es bevorzugt, wenn in vorstehender allgemeinen Formel (I) R¹ bis R³, jeweils unabhängig voneinander, für einen verzweigten oder linearen C₅- bis C₁₅-Alkylrest oder Wasserstoff stehen.

Noch weiter bevorzugt ist es, wenn R¹, R² und R³ für verzweigte oder lineare C₅-C₁₅-Alkylreste, insbesondere für verzweigte C₅-C₁₅-Alkylreste, stehen.

In einer besonders bevorzugten Ausführungsform ist das Dialkylpolysulfid ausgewählt aus der Gruppe, bestehend aus Dialkylpentasulfid, Dioctylpentasulfid und beliebigen Mischungen davon. Insbesondere bevorzugt ist das kommerziell erhältliche Produkt Additin^{®} 2540 der Rhein Chemie Rheinau GmbH.

Das Dialkylpolysulfid kann auch in beliebigen Mischungen von mehr als einem erfindungsgemäß vorgesehenen Dialkylpolysulfid verwendet werden.

Wenn im Rahmen der vorliegenden Erfindung Öle auf Basis nachwachsender Rohstoffe verwendet werden, so werden diese vorzugsweise ausgewählt aus der Gruppe, bestehend aus Taigfettsäure, Sonnenblumenölfettsäure, Heringsölfettsäure, Linolsäure, Lindensäure, Kokosölfettsäure, Tranfettsäure, Kokospalmkernölfettsäure, Sojaölfettsäure, Rübölfettsäure, Erdnussölfettsäure oder Palmölfettsäure, welche als Hauptkomponenten Ölsäure und Palmitinsäure enthalten. Besonders bevorzugt ist in diesem Fall die Verwendung der Rübölfettsäure.

Die erfindungsgemäß vorgesehene Zusammensetzung eignet sich insbesondere als Additivpaket bei der Vulkanisation von Naturkautschuk (NR), Butadien-Kautschuk (BR), Butylkautschuk (IIR), Chlorbutylkautschuk (CIIR), Brombutylkautschuk (BIIR), Isoprenkautschuk (IR), Acrylatkautschuk (ACM), Ethylen-Acrylat-Kautschuk (AEM), hydrierter Nitril-Kautschuk (HNBR), Ethylenoxid-Epichlorhydrin-Kautschuk (ECO), Chloroprenkautschuk (CR), Polyurethankautschuk (walzbar), Styrol-Butadien-Copolymerisate (SBR), Acrylnitril-Butadien-Copolymerisate (NBR), Ethylen-Propylen-Copolymerisate (EPDM) und Fluorkohlenwasserstoff-Kautschuke. Insbesondere eignen sich die erfindungsgemäßen Zusammensetzungen als Additivpaket bei der Vulkanisation von Ethylen-Propylen-Copolymerisaten (EPDM).

Gegenstand der Erfindung ist zudem ein Verfahren zur Herstellung von Vulkanisaten unter Einsatz der erfindungsgemäßen Zusammensetzung.

Weiterer Gegenstand der vorliegenden Erfindung ist die Verwendung der zuvor beschriebenen Zusammensetzungen, umfassend mindestens ein Dispergiermittel und mindestens ein Vulkanisationsadditiv, als Additivpaket in Vulkanisationen von Kautschuken.

Weiterer Gegenstand der vorliegenden Erfindung ist ein Verfahren zur Herstellung einer Additivzusammensetzung, umfassend mindestens ein Dispergiermittel, ausgewählt aus der Gruppe, bestehend aus Dialkylpolysulfiden, Polyethern, Esterölen und Ölen auf Basis nachwachsender Rohstoffe, und mindestens ein Vulkanisationsadditiv, **dadurch gekennzeichnet, dass** das mindestens ein Dispergiermittel und das mindestens eine Vulkanisationsadditiv so miteinander gemischt werden, dass vorzugsweise eine Zusammensetzung resultiert, die einen Gehalt an Additivsubstanz(en) von 90 bis 20 Gew.-%, besonders bevorzugt 90 bis 40 Gew.-%, insbesondere 85 bis 65 Gew.-%, und einen Gehalt an Dispergiermittel(n) von 10 bis 80 Gew.-%, besonders bevorzugt 10 bis 60 Gew.-%, insbesondere 15 bis 35 Gew.-%, jeweils bezogen auf die Gesamtmenge der Zusammensetzung, aufweist.

Das Vulkanisationsadditiv kann dabei gegebenenfalls polymergebunden verwendet werden.

Zu diesem Zweck kann das im Allgemeinen als Pulver vorliegende Vulkanisationsadditiv vorgelegt werden und die als Disperiermittel verwendete Flüssigkeit in eine Mischkammer eingedüst oder eingespritzt werden. Als Mischaggregate können sehr verschiedene Geräte benutzt werden wie beispielsweise: Innenmischer, Einschnecken-, Zweischnecken-, Mehrschneckenextruder, Pflugscharmischer und Sigmamischer (als Sonderform eines Innemischers).

Darüber hinaus betrifft die vorliegende Erfindung die Verwendung von der zuvor beschriebenen Dispergiermittel zur Dispergierung von Vulkansaitionsadditiven. Hinsichtlich der Dispergiermittel und der Vulkanisationsadditive wird auf obige Ausführungen verwiesen.

Die Menge an verwendetem Dispergiermittel hängt im Wesentlichen von der Art und der Konzentration des zu dispergierenden Vulkanisationsadditivs und dem verwendeten Dispergiermittel ab und kann in weiten Bereichen variieren. Entsprechende Mengen des Dispergiermittels können von dem Fachmann anhand von Routineversuche ermittelt werden. Im Rahmen der vorliegenden Erfindung ist es allerdings bevorzugt, wenn das erfindungsgemäß vorgesehene Dispergiermittel in einer Menge, jeweils bezogen auf das Vulkanisationadditiv, von im Allgemeinen 1 bis 99 Gew.-%, vorzugsweise 5 bis 85 Gew.-%, besonders bevorzugt 20 bis 70 Gew.-%, speziell 30 bis 60 Gew.-%, verwendet wird.

Die vorliegende Erfindung wird anhand der nachfolgenden Beispiele näher erläutert.

### Beispiele:

Es wurden die nachfolgend aufgeführten Rohstoffe eingesetzt.

Bei dem Kautschuk Buna EPG 5450 handelt es sich um ein kommerzielles Produkt der LANXESS Deutschland GmbH. Bei dem Kautschuk Epichlormer C handelt es sich um ein kommerzielles Produkt der Firma Daiso Co. Ltd. Bei dem Kautschuk Epichlomer H handelt es sich um ein kommerzielles Produkt der Firma Daiso Co. Ltd. Bei den dunklen Füllstoffen Corax N 550 und Corax N 330 handelt es sich um kommerzielle Produkte von Evonik Degussa GmbH Advanced Fillers & Pigments. Bei dem hellen Füllstoff Silitin N85 handelt es sich um ein kommerzielles Produkt von Hoffmann Mineral GmbH & Co KG. Bei China Clay B handelt es sich um ein kommerzielles Produkt der Georg H. Luh GmbH. Bei dem eingesetzten Weichmacher Shell Flavex 913 handelt es sich um ein kommerziell erhältliches Paraffinöl der Shell Deutschland Oil GmbH. Bei ZnO aktiv handelt es sich um ein kommerzielles Produkt der LANXESS Deutschland GmbH. Bei PEG 4000 handelt es sich um ein kommerzielles Produkt der Clariant Produkte Deutschland GmbH. Bei der Stearinsäure handelt es sich um ein kommerzielles Produkt der Firma Baerlocher GmbH. Bei Vulkalent E/C handelt es sich um ein kommerzielles Produkt der LANXESS Deutschland GmbH. Bei MMBI (Methyl-2-mercaptobenzimidazol) handelt es sich um ein kommerzielles Produkt der Firma Safic-Alcan Deutschland GmbH. Das Hydrotalcit DHT-4C (Mg₄Al₂(OH)₁₂ (C03) 0,8 ist ein kommerzielles Produkt von Kyowa Chemical Industry Co., Ltd.

Bei Methylester SU handelt es sich um ein kommerzielles Produkt der Firma Cargill GmbH. Bei Baylube 68 CL handelt es sich um ein kommerzielles Produkt der Bayer AG. Shell Catenex S 932 ist ein paraffinisches Mineralöl von Deutsche Shell GmbH. Bei der Rübölfettsäure handelt es sich um ein kommerzielles Produkt der Nordische Oelwerke, Walther Carroux GmbH & Co. KG. Die nachfolgenden Additive sind kommerzielle Produkte der Firma Rhein Chemie: Rhenosorb C, Aflux 54, Rhenosin W 759, Rhenogran MBTS-70, Rhenogran TBZTD-70, Rhenogran ZBOP-50, Rhenogran S-80, Rhenogran Vulkalent E-80, Rhenogran ZBOP-50, Rhenofit D/A, Rhenofit CDA, Rhenocure ZDT/S, Rhenogran Triazine-TM70/AEMD, Rhenogran HPCA-70 und Additin RC 2540.

Die Kautschukgrundmischungen wurden für alle Bestandteile außer den jeweils eingesetzten Vernetzungs- und Beschleunigerbestandteilen in einem Laborinnenmischer GUMIX 2 IM, Typ Banburry, bei einer Rotordrehzahl von 40 U/min und einem Füllgrad von 65 % hergestellt. Alle weiteren Bestandteile, insbesondere auch die Vernetzungs- und Beschleunigerbestandteile, wurden in einer zweiten Mischstufe bei 70 °C Anfangstemperatur und weniger als 100 °C Auswurftemperatur im Innenmischer eingemischt. Die entstandenen Mischungen wurden auf einer Laborwalze von Rubicon (Walzenabstand: 150 mm, Walzenbreite: 320 mm) mit einer Friction von 1:1.25 homogenisiert. Die Mischungen wurden auf eine Dicke von ca. 2 mm als Fell ausgezogen. Die Mischungen wurden in einer Hydrauliklaborpresse von Agila, Typ PE 100, bei 180 bar vulkanisiert.

Die Durchführung des G40-Tests erfolgt in folgender Weise. Es werden 100 g des zu prüfenden Rhenograns (Dispergiermittel + Vulkanisationsadditiv Vulkalent E) abgewogen. Anschließend werden 300 g der Kautschukmischung abgewogen. An der Laborwalze wird ein Friktionsverhältnis von 18 : 15 mit einem Walzenspalt von ca. 1,9 mm und einer Walzentemperatur von ca. 50 °C eingestellt. Die Kautschukmischung wird auf die eingerichtete Walze gegeben. Nachdem sich innerhalb von ca. 1 Minute ein komplettes Fell gebildet hat, wird die zu prüfende Chemikalienkombination über dem Walzenspalt aufgegeben und auf der Walze laufengelassen bis ein homogenes Fell zu sehen ist. Anschließend wird mit dem Wolzenmesser das Walzfell beidseitig sechsmal zu ¾ eingeschnitten, dann zu einer Puppe gerollt und sechsmal senkrecht gestürzt. Danach wird die Puppe zu einem 3 - 4 mm dicken Fell ausgezogen. Das Fell wird in passende Streifen geschnitten über eine Fütterwalze in einen Meßextruder der Firma Göttfert, Typ Torsiograph, eingefüttert. Der Extruder wird bei einer Drehzahl von 60 U/min betrieben und ist mit einem Strainersieb von 150 µm und einem Stützsieb von 250 µm Maschenweite ausgestattet. Anschließend wird der Düsenkopf abgeschraubt und das Strainersieb vorsichtig von dem Prüfbatchanguß gelöst. Die Beurteilung der Stippenverteilung wird visuell unter dem Mikroskop vorgenommen. Der "Siebkuchen" wird unter dem Mikroskop bei 40-facher Vergrößerung betrachtet. Es werden 70 % der Angussoberfläche (3,1 cm²) ausgewertet, der Rand wird mit einem Lochscheibe (Durchmesser 1 cm) abgedeckt. Die Wirkstoff-Stippen werden mit der im Okular integrierten Skala ausgemessen und gezählt. Es werden die Anzahl der Stippen bei einer Stippengröße von 150 - 175 µm, 175 - 250 µm und > 250pm erfasst.

Der 8-Parameter für die in den folgenden Beispielen verwendeten Dispergiermittel sind wie folgt:

| Produkt | δ-Parameter | δ-Parameter |
|---|---|---|
| | (cal/cm³)^{1/2} | J/cm³ |
| Additin RC 2540 | 8,72 | 17,84 |
| Methylester SU | 8,34 | 17,05 |
| Baylube 68 CL | 8,40 | 17,18 |
| Rübölfettsäureglycylester | 6,63 | 13,57 |

**Tabelle 1** gibt die verwendeten Rezepturen und Mischungsbestandteile der Mischungsserie 1 an.

**Tabelle 2** gibt die Ergebnisse der Mischungsprüfung und der Vulkanisatprüfung der Mischungen aus Tabelle 1 an.

**Tabelle 3** gibt die Zusammensetzung, physikalische Charakterisierung und Stippenverhalten von Abmischungen aus Vulkalent E (Vulkanisationsadditiv) und RC 2540 (Dispergiermittel) (GE 2011 1 bis GE 2011 5) an.

Die Herstellung der Abmischungen aus Vulkalent E und RC 2540 erfolgt mit Hilfe eines Rheomix R600 Innenmischers als Teil des PolyLab Systems der Firma Haake bei Raumtemperatur bis 80 °C und einer Rotordrehzahl von 30 U/min. Hierbei werden die jeweiligen Kristallitchemikalien, wie z.B. Vulkalent E, vorgelegt und es wird das flüssige Additiv, wie z.B. RC 2540, hinzudosiert. Diese Kombination wird bis zum Erreichen einer homogenen Mischung, in der Regel 5 Minuten, gemischt.

**Tabelle 4** gibt die Zusammensetzung, physikalische Charakterisierung und Stippenverhalten von Abmischungen aus Vulkalent E (Vulkanisationsadditiv) und Methylester SU (Dispergiermittel) (GE 2034 1 bis GE 2034 5) an.

**Tabelle 5** gibt die Zusammensetzung, physikalische Charakterisierung und Stippenverhalten von Abmischungen aus Vulkalent E (Vulkanisationsadditiv) und Baylube 68 CL (Dispergiermittel) (GE 2035 1 bis GE 2035 5) an.

**Tabelle 6** gibt die Zusammensetzung und physikalische Charakterisierung von Abmischungen aus Vulkalent E (Vulkanisationsadditiv) und Rübölfettsäure (Dispergiermittel) (GE 2033 1 bis GE 2033 5) an.

**Tabelle 7** gibt die verwendeten Rezepturen und Mischungsbestandteile der Mischungsserie 2 an. Die Herstellung der Mischungen erfolgt wie oben beschrieben.

**Tabelle 8** gibt die Mischungsprüfung der unvulkanisierten Kautschukmischung und Vulkanisatprüfung der Mischungsserie 2 aus Tabelle 7 an.

**Tabelle 9** gibt die verwendeten Rezepturen und Mischungsbestandteile der Mischungsserie 3 an. Die Herstellung der Mischungen erfolgt wie oben beschrieben.

Die **Tabelle 10** gibt die Mischungsprüfung der unvulkanisierten Kautschukmischung und Vulkanisationsprüfung der Mischungsserie 3 an.

**Tabelle 1: Rezepturen der Mischungsserie 1**

| Versuch | | 1 | 2 | 3 | 4 | 5 | 6 | 7 | 8 | 9 | 10 | 11 | 12 | 13 |
|---|---|---|---|---|---|---|---|---|---|---|---|---|---|---|
| Rezeptur | | | | | | | | | | | | | | |
| Buna EPG 5450 | phr | 100 | 100 | 100 | 100 | 100 | 100 | 100 | 100 | 100 | 100 | 100 | 100 | 100 |
| Ruß N 550 | | 90 | 90 | 90 | 90 | 90 | 90 | 90 | 90 | 90 | 90 | 90 | 90 | 90 |
| Silitin N85 | | 50 | 50 | 50 | 50 | 50 | 50 | 50 | 50 | 50 | 50 | 50 | 50 | 50 |
| Paraffinöl | | 75 | 75 | 75 | 75 | 75 | 75 | 75 | 75 | 75 | 75 | 75 | 75 | 75 |
| ZnO aktiv | | 5 | 5 | 5 | 5 | 5 | 5 | 5 | 5 | 5 | 5 | 5 | 5 | 5 |
| PEG 4000 | | 2 | 2 | 2 | 2 | 2 | 2 | 2 | 2 | 2 | 2 | 2 | 2 | 2 |
| Stearinsäure | | 1 | 1 | 1 | 1 | 1 | 1 | 1 | 1 | 1 | 1 | 1 | 1 | 1 |
| Phenosorb C | | 5 | 5 | 5 | 5 | 5 | 5 | 5 | 5 | 5 | 5 | 5 | 5 | 5 |
| | | 328 | 328 | 328 | 328 | 328 | 328 | 328 | 328 | 328 | 328 | 328 | 328 | 328 |
| Rhenogran MBTS-70 | | 1,5 | 1,5 | 1,5 | 1,5 | 1,5 | 1,5 | 1,5 | 1,5 | 1,5 | 1,5 | 1,5 | 1,5 | 1,5 |
| Rhenogran TBZTD-70 | | 1 | 1 | 1 | 1 | 1 | 1 | 1 | 1 | 1 | 1 | 1 | 1 | 1 |
| Rhenogran ZBOP-50 | | 2 | 2 | 2 | 2 | 2 | 2 | 2 | 2 | 2 | 2 | 2 | 2 | 2 |
| Rhenogran S-80 | | 1,2 | 1,2 | 1,2 | 1,2 | 1,2 | 1,2 | 1,2 | 1,2 | 1,2 | 1,2 | 1,2 | 1,2 | 1,2 |
| Rhenogran Vulkalent E-80 | | 0 | 1 | 2 | | | | | | | | | | |
| GE-2011 1 | | | | | 0,8 | 1,6 | | | | | | | | |
| GE-2011 2 | | | | | | | 0,8 | 1,6 | | | | | | |
| GE-2011 3 | | | | | | | | | 0,8 | 1,6 | | | | |
| GE-2011 4 | | | | | | | | | | | 0,8 | 1,6 | | |
| GE-2011 5 | | | | | | | | | | | | | 0,8 | 1,6 |
| Menge reines Vulkalent E in der Rezeptur | phr | 0 | 0,8 | 1,6 | 0,2 | 0,4 | 0,28 | 0,56 | 0,4 | 0,8 | 0,52 | 1,04 | 0,6 | 1,2 |

Hierbei sind die Mischungen 1, 2 und 3 Vergleichsbeispiele, in welchen das Vulkanisationsadditiv Vulkalent E ohne Zusatz eines erfindungsgemäßen Dispergiermittels polymergebunden verwendet wird. Die Mischungen 4 bis 13 sind die erfindungsgemäßen Beispiele, in welchen das Vulkanisationsadditiv Vulkalent E in Abmischung mit dem erfindungsgemäßen Dispergiermittel Additin 2540 (vgl. GE 2011 1 bis GE 20 11 2) verwendet wird.

**Tabelle 2: Mischungsprüfung der unvulkanisierten Kautschukmischung und Vulkanisatprüfung der Mischungen aus Tabelle 1**

| Versuch | Mischung | 1 | 2 | 3 | 4 | 5 | 6 | 7 | 8 | 9 | 10 | 11 | 12 | 13 |
|---|---|---|---|---|---|---|---|---|---|---|---|---|---|---|
| Additiv | | - | Vulkalent E | Vulkalent E | GE 2011 1 | GE 2011 1 | GE 2011 2 | GE 2011 2 | GE 2011 3 | GE 2011 3 | GE 2011 4 | GE 2011 4 | GE 2011 5 | GE 2011 5 |
| | | | | | | | | | | | | | | |
| Mooney Scorch, 130 °C, †5 | Minuten | 10,2 | 27,4 | 37,7 | 12,6 | 15,2 | 14,2 | 20,8 | 18,5 | 29,9 | 22 | 33,8 | 24,4 | 41,8 |
| Mooney Scorch, 130 °C, †35 | Minuten | 18,2 | 37,6 | 55,5 | 20,6 | 24 | 22 | 31,3 | 27,5 | 42,5 | 32 | 47,7 | 34,4 | 56,7 |
| Mooneyviskosität 100 °C (ML 1+4) | ME | 37 | 36 | 37 | 36 | 35 | 36 | 36 | 35 | 35 | 36 | 35 | 36 | 35 |

| Rheometer RPA 2000 P, 180 °C | | | | | | | | | | | | | | |
|---|---|---|---|---|---|---|---|---|---|---|---|---|---|---|
| Fmin | dNm | 0,8 | 0,8 | 0,8 | 0,8 | 0,8 | 0,8 | 0,8 | 0,8 | 0,8 | 0,8 | 0,8 | 0,8 | 0,8 |
| Fmax | dNm | 11,3 | 12,8 | 13,4 | 11,4 | 1,8 | 11,7 | 11,8 | 11,8 | 12,6 | 12,7 | 12,8 | 13 | 13,3 |
| t10 | Minuten | 1 | 1,8 | 2,7 | 1,2 | 1,3 | 1,3 | 1,6 | 1,4 | 1,8 | 1,6 | 2,1 | 1,7 | 2,4 |
| t50 | Minuten | 1,6 | 2,6 | 3,8 | 2 | 2,4 | 2,1 | 2,9 | 2,3 | 3,1 | 2,5 | 3,3 | 2,6 | 3,7 |
| t90 | Minuten | 4,9 | 6,7 | 10,1 | 8,8 | 9 | 8,2 | 10,2 | 5,7 | 8,2 | 6,1 | 7,7 | 5,8 | 8,8 |

| Vulkanisation 1,5* t90 bei 180 °C | | | | | | | | | | | | | | |
|---|---|---|---|---|---|---|---|---|---|---|---|---|---|---|
| Härte | Shore A | 54 | 55 | 57 | 56 | 56 | 56 | 55 | 56 | 56 | 56 | 56 | 57 | 57 |
| Druckverformungsrest, 23 °C, 3 Tage | % | 7 | 6 | 4 | 6 | 5 | 5 | 6 | 6 | 5 | 6 | 5 | 5 | 4 |
| Druckverformungsrest, 100 °C, 3 Tage | % | 61 | 49 | 43 | 58 | 66 | 57 | 68 | 56 | 56 | 48 | 53 | 51 | 54 |
| Weiterreißwiderstand, Graves | N/mm | 1,6 | 15,9 | 15,1 | 18,8 | 17,3 | 18,9 | 19,1 | 15 | 16 | 13,9 | 16,4 | 18,3 | 13,4 |
| Zugdehnung | % | 690 | 630 | 570 | 650 | 680 | 640 | 690 | 650 | 590 | 590 | 660 | 600 | 590 |
| Modul bei 100 % Dehnung | MPa | 1,4 | 1,6 | 1,6 | 1,4 | 1,4 | 1,5 | 1,4 | 1,5 | 1,6 | 1,6 | 1,6 | 1,6 | 1,5 |
| Reißfestigkeit | MPa | 10,1 | 10,5 | 9,5 | 9,9 | 9,9 | 9,9 | 9,8 | 9,9 | 10 | 10,2 | 10,7 | 10,4 | 9,8 |

Die Bestimmung der Mooney-Viskosität erfolgt bei 100 °C nach DIN 53523, Teil 3. Die Bestimmung von Mooney-Scorch erfolgt bei 130 °C nach DIN 53523, Teil 4. Die Bestimmung des Vulkanisationsverhaltens erfolgt bei 180 °C nach DIN 53529, Teil 3. Die Bestimmung der Härte Shore A erfolgt nach DIN 53505. Die Bestimmung des Druckverformungsrestes (DVR) erfolgt nach DIN 53517. Die Bestimmung des Weiterreißwiderstandes nach Graves erfolgt nach DIN 53515. Die Bestimmung des Zug-Dehnungsverhaltens (Modul bei 100 % Dehnung, Bruchdehnung und Reißfestigkeit) erfolgt nach DIN 53504.

Aus der Tabelle 2 wird deutlich, dass die gewünschte Beeinflussung des Anvulkanisationsverhaltens wie in den Vergleichsbeispielen 2 und 3 auch in den erfindungsgemäßen Bespielen 10, 11, 12, 13 erreicht wird, ohne dass es zu Nachteilen in den Vulkanisationseigenschaften kommt. Besonders wünschenswert ist der Erhalt des Zug-Dehnungsverhaltens und des Druckverformungsrestverhaltens. Beides ist hier gegeben.

Unter der Bezeichnung GE 2011 werden unterschiedliche Mischungen von Vulkalent^{®} E und Additin 2540 verstanden, welche sich im Hinblick auf die Menge an Vulkalent^{®} E und Additin 2540 (Dialkylpolysulfid) unterscheiden. Ein Überblick über die Additivpakete GE 2011 folgt in der nachfolgenden Tabelle 3.

**Tabelle 3: Zusammensetzung, physikalische Charakterisierung und Stippenverhalten von Abmischungen aus Vulkalent E und RC 2540 (GE 2011 1 bis GE 2011 5).**

| Zusammensetzung Chemikalienmischung | | Vulkalent E | GE 2011 1 | GE 2011 2 | GE 2011 3 | GE 2011 4 | GE 2011 5 |
|---|---|---|---|---|---|---|---|
| Vulkalent E | % | 100 | 25 | 35 | 50 | 65 | 75 |
| Additin RC 2540 | % | 0 | 75 | 65 | 50 | 35 | 25 |
| | | | | | | | |
| Erscheinungsform | | Pulver | flüssig | flüssig | Paste | Paste | Pulver |
| Stippentest G40 | | | | | | | |
| Anzahl Stippen | | | | | | | |
| 150 - 175 µm | Anzahl | 20 | 0 | 0 | 3 | 1 | 1 |
| 175 - 250 µm | Anzahl | 10 | 0 | 0 | 5 | 1 | 1 |
| > 250 µm | Anzahl | 1 | 0 | 0 | 2 | 2 | 2 |

| DSC, Aufheizung mit 10 K/min | | | | | | | |
|---|---|---|---|---|---|---|---|
| Schmelzbeginn | °C | 111,5 | 78,3 | 79,7 | 88,6 | 93,2 | 97,9 |
| Schmelzmaximum, - punkt | °C | 115,5 | 87,7 | 95,1 | 100,2 | 103,7 | 105,5 |
| Schmelzende | °C | 126,9 | 102,5 | 106,8 | 111,4 | 114,0 | 116,1 |
| Delta Schmelzbeginn zu Vulkalent E | °C | 0 | 33,2 | 31,9 | 22,9 | 18,3 | 13,6 |
| Delta Schmelzmaximum zu Vulkalent E | °C | 0 | 27,8 | 20,4 | 15,3 | 11,8 | 10,0 |
| Delta Schmelzende zu Vulkalent E | °C | 0 | 24,4 | 20,1 | 15,5 | 12,9 | 10,8 |

Die Anzahl der Stippen werden nach dem G40-Test, einem Rhein Chemie internen Qualitätstest, ermittelt. Es zeigt sich, dass nach Abmischung alle erfindungsgemäßen Beispiele (GE 2011 1 bis GE 2011 15) sehr viel weniger Stippen aufweisen wie im Vergleichbeispiel (Vulkalent E). Die Bestimmung des Schmelzverhaltens erfolgt mit Hilfe der Differenzkalorimetrie mit einem Gerät der Mettler Toledo, Typ DSC 822/670. Es zeigt sich, dass alle erfindungsgemäßen Beispiele eine Änderung des Schmelzverhaltens insgesamt (Schmelzbeginn, Schmelzmaximum und Schmelzende) und gleichzeitig eine Reduktion der Stippen bewirken. Es fällt auf, dass die besonders geeigneten erfindungsgemäßen Beispiele GE 2011 4 und GE 2011 5 eine Verschiebung des Schmelzmaximums zu Vulkalent E von 9 bis 13 °C bewirken.

In einer gemeinsamen Betrachtung der Tabellen 2 und 3 fällt auf, dass insbesondere die Abmischungen GE 2011 4 und GE 2011 5 (Zugabe von Additin 2540 zu dem Vulkalent^{®} E) eine Verbesserung der Stippensituation bringen, ohne dass die sonstigen Mischungseigenschaften und Vulkanisationseigenschaften negativ beeinflusst werden.

**Tabelle 4: Zusammensetzung und physikalische Charakterisierung von Abmischungen aus Vulkalent E und Methylester SU (GE 2034 1 bis GE 2034 5)**

| Zusammensetzung Chemikalienmischung | | Vulkalent E | GE 2034 1 | GE 2034 2 | GE 2034 3 | GE 2034 4 | GE 2034 5 |
|---|---|---|---|---|---|---|---|
| Vulkalent E | % | 100 | 25 | 35 | 50 | 65 | 75 |
| Methylester SU | % | 0 | 75 | 65 | 50 | 35 | 25 |
| Erscheinungsform | % | Pulver | flüssig | flüssig | Paste | Paste | Pulver |
| Stippentest G40 | | | | | | | |

| Anzahl Stippen | | | | | | | |
|---|---|---|---|---|---|---|---|
| 1 50 - 1 75 µm | Anzahl | 20 | - | - | - | - | 2 |
| 175 - 250 µm | Anzahl | 10 | - | - | - | - | 2 |
| > 250 µm | Anzahl | 1 | - | - | - | - | 0 |

| DSC, Aufzeizung mit 10 K/min | | | | | | | |
|---|---|---|---|---|---|---|---|
| Schmelzbeginn | °C | 111,5 | 52,8 | 53 | 66,7 | 79 | 88,8 |
| Schmelzmaximum, - punkt | °C | 115,5 | 89,8 | 93,9 | 100,2 | 100 | 100,5 |
| Schmelzende | °C | 126,9 | 97,4 | 103,9 | 105 | 105,3 | 106,7 |
| Delta Schmelzbeginn zu Vulkalent E | °C | 0 | 58,7 | 58,5 | 44,8 | 32,5 | 22,7 |
| Delta Schmelzmaximum zu Vulkalent E | °C | 0 | 25,7 | 21,6 | 15,3 | 15,5 | 15,0 |
| Delta Schmelzende zu Vulkalent E | °C | 0 | 29,5 | 23,0 | 21,9 | 21,6 | 20,2 |

Die Bestimmung des Schmelzverhaltens erfolgt wie unter Tabelle 3 beschrieben. Auch hier wird das gewünschte geänderte Schmelzverhalten beobachtet. Bei den Kombinationen GE 2034 1 bis GE 2034 4 wurde kein Stippentest G 40 durchgeführt, da in den Flüssigkeiten und Pasten keine einzelnen Kristalle mehr erkennbar waren.

**Tabelle 5: Zusammensetzung und physikalische Charakterisierung von Abmischungen aus Vulkalent E und Baylube 68 CL (GE 2035 1 bis GE 2035 5)**

| Zusammensetzung Chemikalienmischung | | Vulkalent E | GE 2035 1 | GE 2035 2 | GE 2035 3 | GE 2035 4 | GE 2035 5 |
|---|---|---|---|---|---|---|---|
| Vulkalent E | % | 100 | 25 | 35 | 50 | 65 | 75 |
| Methylester SU | % | 0 | 75 | 65 | 50 | 35 | 25 |
| Erscheinungsform | | Pulver | flüssig | flüssige | Paste | Paste | Pulver |

| DSC, Aufheizung mit 10 K/min | | | | | | | |
|---|---|---|---|---|---|---|---|
| Schmelzbeginn | °C | 111,5 | 3,01 | 4,08 | 38,9 | 78,7 | 87,5 |
| Schmelzmaximum, - punkt | °C | 115,5 | 70 | 81,9 | 95,3 | 104 | 107,7 |
| Schmelzende | °C | 126,9 | 97 | 97,1 | 101,6 | 109,6 | 111,5 |
| Delta Schmelzbeginn zu Vulkalent E | °C | 0 | 108,5 | 107,4 | 72,6 | 32,8 | 24,0 |
| Delta Schmelzmaximum zu Vulkalent E | °C | 0 | 45,5 | 33,6 | 20,2 | 1 1,5 | 7,8 |
| Delta Schmelzende zu Vulkalent E | °C | 0 | 29,9 | 29,8 | 25,3 | 17,3 | 15,4 |

Die Bestimmung des Schmelzverhaltens erfolgt wie unter Tabelle 3 beschrieben. Auch hier wird das gewünschte geänderte Schmelzverhalten beobachtet. Das Schmelzverhalten verhält sich dabei analog zu der Stippenbildung.

**Tabelle 6: Zusammensetzung und physikalische Charakterisierung von Abmischungen aus Vulkalent E und Rübölfettsäure (GE 2033 1 bis GE 2033 5)**

| | | Vulkalent E | GE 2033 1 | GE 2033 2 | GE 2033 3 | GE 2033 4 | GE 2033 5 |
|---|---|---|---|---|---|---|---|
| Vulkalent E | % | 100 | 25 | 35 | 50 | 65 | 75 |
| Rübölfettsäure | % | 0 | 75 | 65 | 50 | 35 | 25 |
| Erscheinungsform | | Pulver | flüssig | flüssig | Paste | Paste | Pulver |

| DSC, Aufheizung mit 10 K/min | | | | | | | |
|---|---|---|---|---|---|---|---|
| Schmelzbeginn | °C | 111,5 | 66,6 | 77,7 | 87,8 | 94,3 | 96,6 |
| Schmelzmaximum, - punkt | °C | 115,5 | 99,8 | 102 | 105,5 | 106,9 | 107,4 |
| Schmelzende | °C | 126,9 | 105,2 | 105,9 | 109,9 | 110,4 | 111,6 |
| Delta Schmelzbeginn zu Vulkalent E | °C | 0 | 44,9 | 33,8 | 23,7 | 17,2 | 14,9 |
| Delta Schmelzmaximum zu Vulkalent E | °C | 0 | 15,7 | 13,5 | 10,0 | 8,6 | 8,1 |
| Delta Schmelzende zu Vulkalent E | °C | 0 | 21,7 | 21,0 | 17,0 | 16,5 | 15,3 |

Die Bestimmung des Schmelzverhaltens erfolgt wie unter Tabelle 3 beschrieben. Auch hier wird das gewünschte geänderte Schmelzverhalten beobachtet. Das Schmelzverhalten verhält sich dabei analog zu der Stippenbildung.

**Tabelle 7: Rezepturen der Mischungsserie 2**

| Versuch | | 1 | 2 | 3 | 4 | 5 | 6 | 7 | 8 | 9 | 10 |
|---|---|---|---|---|---|---|---|---|---|---|---|
| Rezeptur | | | | | | | | | | | |
| Buna EPG 5450 | phr | 100 | 100 | 100 | 100 | 100 | 100 | 100 | 100 | 100 | 100 |
| Ruß N 550 | | 90 | 90 | 90 | 90 | 90 | 90 | 90 | 90 | 90 | 90 |
| Silitin N 85 | | 50 | 50 | 50 | 50 | 50 | 50 | 50 | 50 | 50 | 50 |
| Paraffinöl | | 75 | 75 | 75 | 75 | 75 | 75 | 75 | 75 | 75 | 75 |
| ZnO aktiv | | 5 | 5 | 5 | 5 | 5 | 5 | 5 | 5 | 5 | 5 |
| PEG 4000 | | 2 | 2 | 2 | 2 | 2 | 2 | 2 | 2 | 2 | 2 |
| Stearinsäure | | 1 | 1 | 1 | 1 | 1 | 1 | 1 | 1 | 1 | 1 |
| Rhenosorb C | | 5 | 5 | 5 | 5 | 5 | 5 | 5 | 5 | 5 | 5 |
| | | 328 | 328 | 328 | 328 | 328 | 328 | 328 | 328 | 328 | 328 |
| Rhenogran MBTS-70 | | 1,5 | 1,5 | 1,5 | 1,5 | 1,5 | 1,5 | 1,5 | 1,5 | 1,5 | 1,5 |
| Rhenogran TBZTD-70 | | 1 | 1 | 1 | 1 | 1 | 1 | 1 | 1 | 1 | 1 |
| Rhenogran ZBOP-50 | | 2 | 2 | 2 | 2 | 2 | 2 | 2 | 2 | 2 | 2 |
| Rhenogran S-80 | | 1,2 | 1,2 | 1,2 | 1,2 | 1,2 | 1,2 | 1,2 | 1,2 | 1,2 | 1,2 |
| Vulkalent E/C | | 0,6 | | | | | | | | | |
| GE-2011 4; Additin RC 2540 | | | 0,9 | | | | | | | | |
| GE-2011 5; Additin RC 2540 | | | | 0,8 | 0,6 | | | | | | |
| GE-2034 4; Methylester SU | | | | | | 0,9 | | | | | |
| GE-2034 5; Methylester SU | | | | | | | 0,8 | 0,6 | | | |
| GE-2035 4; Baylube 68 CL | | | | | | | | | 0,9 | | |
| GE-2035 5; Baylube 68 CL | | | | | | | | | | 0,8 | 0,6 |
| Menge Vulkalent E in der Mischung | phr | 0,6 | 0,6 | 0,6 | 0,45 | 0,6 | 0,6 | 0,45 | 0,6 | 0,6 | 0,45 |

Hierbei ist die Mischung 1 das Vergleichsbeispiel, d.h. es wird Vulkalent E ohne Dispergiermittel verwendet. Die Mischungen 2 bis 13 sind erfindungsgemäße Beispiele, in welchen Vulkalent E in Abmischung mit erfindungsgemäß vorgesehenen Dispergiermitteln verwendet wird (vgl. GE-2011 4, GE-201 15, GE-2034 4, GE-2034 5, GE-2035 4 und GE 2035 5).

**Tabelle 8: Mischungsprüfung der unvulkanisierten Kautschukmischung und Vulkanisatprüfung der Mischungserie 2 aus Tabelle 7**

| Versuch | | 1 | 2 | 3 | 4 | 5 | 6 | 7 | 8 | 9 | 10 |
|---|---|---|---|---|---|---|---|---|---|---|---|
| Mooney Scorch, 130 °C, 55 | Minuten | 22,9 | 22,6 | 22,6 | 18 | 22 | 21,4 | 17,8 | 21 | 23 | 18 |
| Mooney Scorch, 130 °C, †35 | Minuten | 31,7 | 31,8 | 31,5 | 25,7 | 30,1 | 29,8 | 25,2 | 29,2 | 31,6 | 25,4 |
| Mooneyviskosität 100 °C (ML 1 + 4) | ME | 33 | 33 | 32 | 32 | 32 | 32 | 32 | 32 | 32 | 32 |

| Rheometer RPA 2000 P, 180 °C | | | | | | | | | | | |
|---|---|---|---|---|---|---|---|---|---|---|---|
| Fmin | dNm | 0,7 | 0,7 | 0,7 | 0,7 | 0,7 | 0,7 | 0.7 | 0,7 | 0,7 | 0,7 |
| Fmax | dNm | 14,2 | 13,4 | 13,2 | 13,7 | 13,6 | 13,1 | 13,2 | 13,8 | 13,9 | 12,6 |
| t10 | Minuten | 1,6 | 1,6 | ,6 | 1,4 | 1,5 | 1,5 | 1,4 | 1,5 | 1,6 | 1,4 |
| t50 | Minuten | 2,4 | 2,6 | 2,5 | 2,3 | 2,3 | 2,3 | 2,2 | 2,3 | 2,4 | 2,1 |
| t90 | Minuten | 6 | 6,9 | 5,9 | 6 | 5,8 | 5 | 5,3 | 5,8 | 6 | 4,8 |

| Vulkanisation 1,5* t90 bei 180 °C | | | | | | | | | | | |
|---|---|---|---|---|---|---|---|---|---|---|---|
| Härte | Shore A | 58 | 58 | 58 | 59 | 58 | 58 | 58 | 59 | 59 | 58 |
| Druckverformungsrest 23 °C, 3 Tage | % | 7 | 8 | 7 | 7 | 7 | 9 | 9 | 8 | 7 | 9 |
| Druckvervormungsrest 100 °C, 3 Tage | % | 50 | 54 | 54 | 56 | 50 | 55 | 54 | 52 | 51 | 55 |
| Zugdehnung | % | 550 | 570 | 630 | 600 | 570 | 570 | 580 | 570 | 580 | 620 |
| Modul bei 100 % Dehnung | MPa | 1,8 | 1,6 | 1,7 | 1,7 | 1,8 | 1,7 | 1,7 | 1,8 | 1,9 | 1,7 |
| Reißfestigkeit | MPa | 10,3 | 10 | 11,1 | 10,9 | 10,5 | 10,3 | 10,1 | 10,6 | 10,9 | 10,9 |

Die Bestimmung der Mooney-Viskosität erfolgt bei 100 °C nach DIN 53523, Teil 3. Die Bestimmung von Mooney-Scorch erfolgt bei 130 °C nach DIN 53523, Teil 4. Die Bestimmung des Vulkanisationsverhaltens erfolgt bei 180 °C nach DIN 53529, Teil 3. Die Bestimmung der Härte Shore A erfolgt nach DIN 53505. Die Bestimmung des Druckverformungsrestes (DVR) erfolgt nach DIN 53517. Die Bestimmung des Zug-Dehnungsverhaltens (Modul bei 100 % Dehnung, Bruchdehnung und Reißfestigkeit) erfolgt nach DIN 53504.

Aus der Tabelle 8 wird deutlich, dass die gewünschte Beeinflussung des Anvulkanisationsverhaltens wie in dem Vergleichsbeispiel 1 und auch in den erfindungsgemäßen Bespielen 2 bis 10 erreicht wird, ohne dass es zu Nachteilen in den Vulkanisationseigenschaften kommt. Besonders wünschenswert ist der Erhalt des Zug-Dehnungsverhaltens und des Druckverformungsrestverhaltens. Beides ist hier gegeben. Dies gilt auch, wenn anstelle des Additin RC 2540, der Methylester SU oder Baylube 68 CL eingesetzt werden.

**Tabelle 9: Rezepturen der Mischungsserie 3**

| Mischung ECO | | 1 | 2 | 3 | 4 | 5 |
|---|---|---|---|---|---|---|
| Epichlormer C | phr | 70 | 70 | 70 | 70 | 70 |
| Epichlormer H | | 30 | 30 | 30 | 30 | 30 |
| China Clay B | | 5 | 5 | 5 | 5 | 5 |
| Ruß N 550 | | 20 | 20 | 20 | 20 | 20 |
| Ruß N 330 | | 20 | 20 | 20 | 20 | 20 |
| Aflux 54 | | 1 | 1 | 1 | 1 | 1 |
| Stearinsäure | | 1 | 1 | 1 | 1 | 1 |
| MMBI | | 0,5 | 0,5 | 0,5 | 0,5 | 0,5 |
| Rhenofit D/A | | 2 | 2 | | 2 | 2 |
| Rhenofit CDA | | 1,5 | 1,5 | 1,5 | 1,5 | 1,5 |
| DHT-4C | | 4 | 4 | 4 | 4 | 4 |
| Rhenosin W 759 | | 6 | 6 | 6 | 6 | 6 |
| Rhenocure ZDT/S | | 1,4 | 1,4 | 1,4 | 1,4 | 1,4 |
| Rhenogran Triazine-TM70/AEMD | | 1,7 | 1,7 | 1,7 | 1,7 | 1,7 |
| Rhenogran HPCA-70 | | 0,5 | 0,5 | 0,5 | 0,5 | 0,5 |
| Rhenogran Vulkalent E-80 | | 0 | 0,4 | | | |
| GE 2011 5 | | | | 0,2 | 0,4 | 0,6 |
| Menge Vulkalent E in der Mischung | phr | 0 | 0,4 | 0,15 | 0,3 | 0,45 |

Hierbei ist die Mischung 1 das Vergleichsbeispiel. Die Mischungen 2 bis 5 sind die erfindungsgemäßen Beispiele.

**Tabelle 10: Mischungsprüfung der unvulkanisierten Kautschukmischung und Vulkanisationsprüfung der Mischungsserie 3 aus Tabelle 9**

| Methode | | | | | | |
|---|---|---|---|---|---|---|
| Mischungsprüfung | Mischung | 1 | 2 | 3 | 4 | 5 |
| Mooney Scorch, 120 °C, †5 | Minuten | 5,8 | 7,2 | 6,4 | 6,9 | 7,6 |
| Mooney Scorch, 120 °C, †35 | Minuten | 10,4 | 14 | 11,9 | 13,2 | 14,7 |
| Mooneyviskosität 100 °C (ML 1 + 4) | ME | 63 | 68 | 67 | 66 | 66 |

| Rheometer RPA 2000 P,170°C | | | | | | |
|---|---|---|---|---|---|---|
| Fmin | dNm | 2,5 | 2,8 | 2,7 | 2,8 | 2,8 |
| Fmax | dNm | 17,8 | 17,5 | 18,1 | 17,9 | 17,6 |
| t10 | Minuten | 0,8 | 0,9 | 0,8 | 0,9 | 0,9 |
| t50 | Minuten | 3,5 | 4,1 | 3,8 | 3,9 | 4,3 |
| t90 | Minuten | 15,1 | 16,8 | 15,8 | 16,5 | 17,6 |

| Vulkanisation 1,5*, †90 bei 170 °C, Sofortprüfung | | | | | | |
|---|---|---|---|---|---|---|
| Härte | Shore A | 69 | 69 | 69 | 68 | 69 |
| Druckverformungsrest, 100 °C | % | 13 | 12 | 12 | 12 | 12 |
| Druckverformungsrest, 150 °C | % | 50 | 51 | 51 | 54 | 58 |
| Druckverformungsrest, 110 °C | % | 34 | 30 | 29 | 31 | 31 |
| Weiterreißwiderstand, Graven | N/mm | 19 | 20,1 | 24,4 | 24,3 | 19,7 |
| Zugdehnung | % | 505 | 530 | 510 | 520 | 523 |
| Modul bei 100 % Dehnung | MPa | 3 | 3,1 | 3,4 | 3,1 | 3,2 |
| Reißfestigkeit | MPa | 12,8 | 13,5 | 12,9 | 13,2 | 13,6 |

| Vulkanisation 1,5* † 90 bei 170 °C, Prüfung nach 100 h künstliche er Alterung bei 150 °C | | | | | | |
|---|---|---|---|---|---|---|
| Härte | Shore A | 76 | 75 | 74 | 74 | 74 |
| Weiterreißwiderstand, Graves | N/mm | 13,5 | 14,5 | 13,2 | 13,6 | 14,4 |
| Zugdehnung | % | 230 | 249 | 238 | 251 | 257 |
| Modul bei 100 % Dehnung | MPa | 4,6 | 4,4 | 4,5 | 4,4 | 4,2 |
| Reißfestigkeit | MPa | 11,2 | 10.9 | 11.1 | 11,2 | 11,3 |
| | | | | | | |

| Vulkanisation 1,5*†90 bei 170 °C, Unterschied Werte Prüfung sofort und nach 100 h künstlicher Alterung bei 150 °C | | | | | | |
|---|---|---|---|---|---|---|
| Härte | | 110 % | 109 % | 107 % | 109 % | 107 % |
| Weiterreißwiderstand, Graves | | 71 % | 72 % | 54 % | 56 % | 73 % |
| Zugdehnung | | 46 % | 47 % | 47 % | 48 % | 49 % |
| Modul bei 100 % Dehnung | | 153 % | 142 % | 132 % | 142 % | 131 % |
| Reißfestigkeit | | 88 % | 81 % | 86 % | 85 % | 83 % |

Die Bestimmung der Mooney-Viskosität erfolgt bei 100 °C nach DIN 53523, Teil 3. Die Bestimmung von Mooney-Scorch erfolgt bei 120 °C nach DIN 53523, Teil 4. Die Bestimmung des Vulkanisationsverhaltens erfolgt bei 170 °C nach DIN 53529, Teil 3. Die Bestimmung der Härte Shore A erfolgt nach DIN 53505. Die Bestimmung des Druckverformungsrestes (DVR) erfolgt nach DIN 53517. Die Bestimmung des Weiterreißwiderstandes nach Graves erfolgt nach DIN 53515. Die Bestimmung des Zug-Dehnungsverhaltens (Modul bei 100 % Dehnung, Bruchdehnung und Reißfestigkeit) erfolgt nach DIN 53504. Die künstliche Alterung wird nach DIN 53508 durchgeführt.

Aus der Tabelle 10 wird deutlich, dass die gewünschte Beeinflussung des Anvulkanisationsverhaltens wie im Vergleichsbeispiel 1 auch in den erfindungsgemäßen Bespielen 2 bis 5 erreicht wird, ohne dass es zu Nachteilen in den Vulkanisationseigenschaften kommt. Besonders wünschenswert ist der Erhalt des Zug-Dehnungsverhaltens und des Druckverformungsrestverhaltens. Beides ist hier gegeben. Darüber hinaus wird zeigen die Werte nach künstlicher Alterung keine Nachteile gegenüber dem Vergleichsbeispiel.

## Patentansprüche

1. Zusammensetzung, umfassend mindestens ein Dispergiermittel, ausgewählt aus der Gruppe, bestehend aus Dialkylpolysulfiden, Polyethern, Esterölen und Ölen auf Basis nachwachsender Rohstoffe, und mindestens ein Vulkanisationsadditiv.

2. Zusammensetzung nach Anspruch 1, **dadurch gekennzeichnet, dass** das Vulkanisationsadditiv ausgewählt ist aus der Gruppe, bestehend aus Vulkanisationsbeschleunigern, Vulkanisationsvernetzern, Vulkanisationsverzögerern, Antioxidationschemikalien, Mastikationschemikalien, Alterungs- und Ermüdungsschutzchemikalien, Füllstoffen, Weichmachern, Treibmitteln, Haftmitteln und Beschleunigeraktivatoren.

3. Zusammensetzung nach Anspruch 1 oder 2, **dadurch gekennzeichnet, dass** Zusammensetzung, bezogen auf ihre Gesamtmenge, 90 bis 20 Gew.-% Additivsubstanz(en) und 10 bis 80 Gew.-% Dispergiermittel umfasst.

4. Zusammensetzung nach einem der Ansprüche 1 bis 3, **dadurch gekennzeichnet, dass** als Dispergiermittel ein Dialkylpolysulfid verwendet wird, welches die allgemeine Formel (I) aufweist 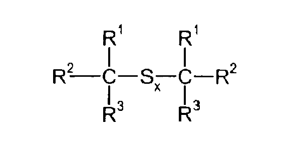 worin
R¹ bis R³, jeweils unabhängig voneinander, gleich oder verschieden sind und für einen linearen oder verzweigten C₁- bis C₁₈-Alkylrest oder für Wasserstoff stehen und
x für die Zahlen 2 bis 5, bevorzugt 3 bis 5 steht.

5. Zusammensetzung nach Anspruch 4, **dadurch gekennzeichnet, dass** das Dialkylpolysulfid ausgewählt wird aus der Gruppe, bestehend aus Dialkylpentasulfid, Dioctylpentasulfid und beliebigen Mischungen davon.

6. Verfahren zur Herstellung einer Additivzusammensetzung, umfassend mindestens ein Dispergiermittel, ausgewählt aus der Gruppe, bestehend aus Dialkylpolysulfiden, Polyethern, Esterölen und Ölen auf Basis nachwachsender Rohstoffe, und mindestens ein Vulkanisationsadditiv, **dadurch gekennzeichnet, dass** das mindestens eine Dispergiermittel und mindestens die mindestens eine Vulkanisationsadditiv miteinander gemischt werden

7. Verfahren zur Herstellung von Vulkanisaten, **dadurch gekennzeichnet, dass** eine Additivzusammensetzung gemäß einem der Ansprüche 1 bis 5 verwendet wird.

8. Verfahren nach Anspruch 7, **dadurch gekennzeichnet, das** die Vulkanisate ausgehend von einem Kautschuk erhalten werden, welcher ausgewählt wird aus der Gruppe, bestehend aus Naturkautschuk (NR), Butadien-Kautschuk (BR), Butylkautschuk (IIR), Chlorbutylkautschuk (CIIR), Brombutylkautschuk (BIIR), Isoprenkautschuk (IR), Acrylatkautschuk (ACM), Ethylen-Acrylat-Kautschuk (AEM), hydrierter Nitril-Kautschuk (HNBR), Ethylenoxid-Epichlorhydrin-Kautschuk (ECO), Chloroprenkautschuk (CR), Polyurethankautschuk (walzbar), Styrol-Butadien-Copolymerisate (SBR), Acrylnitril-Butadien-Copolymerisate (NBR), Ethylen-Propylen-Copolymerisate (EPDM) und Fluorkohlenwasserstoff-Kautschuke.

9. Verwendung von mindestens einem Dispergiermittel, ausgewählt aus der Gruppe, bestehend aus Dialkylpolysulfiden, Polyethern, Esterölen und Ölen auf Basis nachwachsender Rohstoffe, zum Dispergieren von mindestens einem Vulkanisationsadditiv.

10. Verwendung nach Anspruch 9, **dadurch gekennzeichnet, dass** das Vulkanisationsadditiv ausgewählt wird aus der Gruppe der Vulkanisationsbeschleuniger, der Vulkanisationsvernetzer, der Vulkanisationsverzögerer, der Antioxidationsmaterialien, der Mastikationschemikalien, der Alterungs- und Ermüdungsschutzchemikalien, der Füllstoffe, der Weichmacher, der Treibmittel, der Haftmittel und der Beschleunigeraktivatoren.

11. Verwendung nach Anspruch 9 oder 10, **dadurch gekennzeichnet, dass** als Dispergiermittel ein Dialkylpolysulfid verwendet wird, welches die allgemeine Formel (I) aufweist 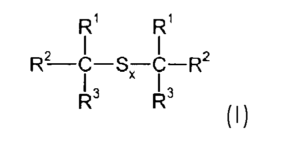 worin
R¹ bis R³, jeweils unabhängig voneinander, gleich oder verschieden sind und für einen linearen oder verzweigten C₁- bis C₁₈-Alkylrest oder für Wasserstoff stehen und
x für die Zahlen 2 bis 5, bevorzugt 3 bis 5 steht.

12. Verwendung nach Anspruch 11, **dadurch gekennzeichnet, dass** das Dialkylpolysulfid ausgewählt wird aus der Gruppe, bestehend aus Dialkylpentasulfid, Dioctylpentasulfid und beliebigen Mischungen davon.

13. Verwendung nach einem der Ansprüche 9 bis 12, **dadurch gekennzeichnet, dass** die Verwendung während der Vulkanisation von Naturkautschuk (NR), Butadien-Kautschuk (BR), Butylkautschuk (IIR), Chlorbutylkautschuk (CIIR), Brombutylkautschuk (BIIR), Isoprenkautschuk (IR), Acrylatkautschuk (ACM), Ethylen-Acrylat-Kautschuk (AEM), hydrierter Nitril-Kautschuk (HNBR), Ethylenoxid-Epichlorhydrin-Kautschuk (ECO), Chloroprenkautschuk (CR), Polyurethankautschuk (walzbar), Styrol-Butadien-Copolymerisate (SBR), Acrylnitril-Butadien-Copolymerisate (NBR), Ethylen-Propylen-Copolymerisate (EPDM) und Fluorkohlenwasserstoff-Kautschuke stattfindet.
